# EUROPÄISCHE PATENTANMELDUNG

(11) **EP 3 671 607 A1**
(43) Veröffentlichungstag der Anmeldung: **24.06.2020**
(21) Anmeldenummer: 18213738.0
(22) Anmeldetag: 18.12.2018
(51) Int. Cl.: G06Q 30/02, G06Q 30/06, G06Q 20/04

(54) **VERFAHREN UND VORRICHTUNG ZUM ERZEUGEN UND VERSENDEN EINER EMPFANGSBERECHTIGUNG**

(71) Anmelder: Netzer, Florian, 80803 München (DE)
(72) Erfinder: Netzer, Florian, 80803 München (DE)
(74) Vertreter: Maiwald Patent- und Rechtsanwaltsgesellschaft mbH

(57) **Zusammenfassung**

Die Erfindung betrifft ein Verfahren und ein Kommunikationssystem zum Erzeugen und Versenden einer Empfangsberechtigung, insbesondere zum Versenden von Waren, Dienstleistungen und/oder anderen Berechtigungen. Das Verfahren weist folgende Schritte auf:
- Erzeugen der Empfangsberechtigung (50), ausgelöst durch eine erste Transaktion (T1) der ersten Kommunikationsvorrichtung (30), auf einem Anbieterserver (20);
- Übermitteln der Empfangsberechtigung (50), mittels einer zweiten Transaktion (T2) des Anbieterservers (20), von dem Anbieterserver (20) zu der ersten Kommunikationsvorrichtung (30); und
- Übermitteln der Empfangsberechtigung (50), mittels einer dritten Transaktion (T3) der ersten Kommunikationsvorrichtung (30), von der ersten Kommunikationsvorrichtung (30) zu der zweiten Kommunikationsvorrichtung (40).

Dabei sind die Empfangsberechtigung (50) und der Anbieterserver (20) dazu ausgeführt, bei Erhalt der Empfangsberechtigung (50) durch den Anbieterserver (20) von der zweiten Kommunikationsvorrichtung (40) einen Versand einer Ware und/oder einer Berechtigung an eine Adresse der zweiten Kommunikationsvorrichtung (40) zu veranlassen.

## Beschreibung

### Gebiet der Erfindung

Die Erfindung betrifft ein Verfahren und ein Kommunikationssystem zum Erzeugen und Versenden einer Empfangsberechtigung, insbesondere zum Auslösen eines Versands von Waren, Dienstleistungen und/oder anderen Berechtigungen, wie z.B. von Gutscheinen oder Rechten. Das Kommunikationssystem kann beispielsweise auf einem Tablet und/oder einem Smartphone implementiert sein, z.B. als eine App, die mit einem Server zusammenwirkt. Außerdem betrifft die Erfindung ein Programmelement und ein computerlesbares Medium.

### Hintergrund der Erfindung

Kommunikationssysteme ermöglichen beispielsweise den Einkauf von einer Vielzahl von Waren, Dienstleistungen und/oder anderen Berechtigungen, die dann insbesondere auch verschenkt werden können. Allerdings muss, insbesondere bei physischen Gegenständen, dafür mindestens die Adresse des Beschenkten bekannt sein, um den Versand der Waren und/oder der anderen Berechtigungen an diese Adresse zu veranlassen. Es ist bislang nicht auf einfache Weise möglich, ein Geschenk zu versenden und/oder anzunehmen, ohne eine Art von Adresse zu kennen. Dieses Versenden ohne bekannte Adresse kann aber beispielsweise während einer Chat- oder SMS-Unterhaltung gewünscht sein.

### Zusammenfassung der Erfindung

Vor diesem Hintergrund ist es Aufgabe der Erfindung, die Nachteile des Standes der Technik wenigstens teilweise zu überwinden, insbesondere eine Empfangsberechtigung ohne Kenntnis einer Adresse versenden zu können.

Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt der Erfindung betrifft ein Verfahren zum Erzeugen und Versenden einer Empfangsberechtigung, von einer ersten Kommunikationsvorrichtung zu einer zweiten Kommunikationsvorrichtung, wobei das Verfahren folgende Schritte aufweist:
- Erzeugen der Empfangsberechtigung, ausgelöst durch eine erste Transaktion der ersten Kommunikationsvorrichtung, auf einem Anbieterserver;
- Übermitteln der Empfangsberechtigung, mittels einer zweiten Transaktion des Anbieterservers, von dem Anbieterserver zu der ersten Kommunikationsvorrichtung; und
- Übermitteln der Empfangsberechtigung, mittels einer dritten Transaktion der ersten Kommunikationsvorrichtung, von der ersten Kommunikationsvorrichtung zu der zweiten Kommunikationsvorrichtung, und
wobei die Empfangsberechtigung und der Anbieterserver dazu ausgeführt sind, bei Erhalt der Empfangsberechtigung durch den Anbieterserver von der zweiten Kommunikationsvorrichtung einen Versand einer Ware und/oder einer Berechtigung an eine Adresse der zweiten Kommunikationsvorrichtung zu veranlassen.

Der Anbieterserver, die erste Kommunikationsvorrichtung und die zweite Kommunikationsvorrichtung können verschiedene Geräte sein. Die Geräte können beispielsweise ein Tablet, ein Smartphone, einen PC (Personal Computer) oder Ähnliches umfassen, die Geräte können auch als ein Prozess auf einem Server implementiert sein, wobei auf den Prozess andere Geräte und/oder Programme, z.B. Apps oder auch andere Terminals und/oder Frontends, zugreifen können. Bei dem Anbieterserver, der ersten Kommunikationsvorrichtung und der zweiten Kommunikationsvorrichtung kann es sich aber auch um ein einziges Gerät handeln, beispielsweise um einen Server, der verschiedene Funktionalitäten aufweist, wie beispielsweise die Fähigkeit, vordefinierte Transaktionen zu übermitteln und/oder zu empfangen. Dabei können z.B. die erste und/oder die zweite Kommunikationsvorrichtung als einfache Terminals ausgeführt sein. Der Server kann einen oder mehrere Server umfassen, beispielsweise Verwaltungsserver oder auch Server von kommerziellen Anbietern und/oder Plattformen, insbesondere Verkaufsplattformen. Der Server kann auch z.B. Teil einer Cloud sein.

Die erste Transaktion von der ersten Kommunikationsvorrichtung kann beispielsweise den Kauf der Empfangsberechtigung, d.h. den Kauf einer Berechtigung zum Empfang von Waren, Dienstleistungen und/oder anderen Berechtigungen, wie Gutscheinen oder immateriellen Gütern, umfassen. Die erste Transaktion kann beispielsweise einen Bezahlvorgang beinhalten. Der Bezahlvorgang kann auf dem Anbieterserver durchgeführt werden. Der Bezahlvorgang kann auch auf einem völlig anderen Server - z.B. dem Server einer Bank und/oder eines Dienstleisters - durchgeführt werden und dann dem Anbieterserver mitgeteilt werden. Die erste Kommunikationsvorrichtung kann z.B. von einer Person bedient werden, welche die Empfangsberechtigung verschenken will, beispielsweise Blumen, eine Ballonfahrt oder ein E-Book. Ausgelöst durch die erste Transaktion erzeugt der Anbieterserver die Empfangsberechtigung, die der Nutzer der ersten Kommunikationsvorrichtung dann an den zu Beschenkenden übermitteln kann.

Durch die zweite Transaktion, das Übermitteln der Empfangsberechtigung von dem Anbieterserver an die erste Kommunikationsvorrichtung, wird eine erste Person, welche die erste Kommunikationsvorrichtung bedient, gewissermaßen zum Besitzer der Empfangsberechtigung. Die erste Person könnte die Empfangsberechtigung (zumindest direkt nach der zweiten Transaktion) auch selbst auf dem Anbieterserver einlösen.

Die erste Kommunikationsvorrichtung ist nun in der Lage, mittels der dritten Transaktion die Empfangsberechtigung an die zweite Kommunikationsvorrichtung zu übermitteln. Die dritte Transaktion kann einem Vorgang des Schenkens entsprechen. Dies kann z.B. so ausgestaltet sein, dass die erste Person, welche die erste Kommunikationsvorrichtung bedient, eine Ziffernfolge an die zweite Kommunikationsvorrichtung übermittelt. Die zweite Kommunikationsvorrichtung kann von einer zweiten Person bedient werden. Das Übermitteln kann z.B. während einer, vorzugsweise computergestützten, Unterhaltung zwischen der ersten und der zweiten Person stattfinden. Die Unterhaltung kann computergestützt, z.B. via Chat, Instant Message, SMS oder anderen Kommunikationsmethoden, stattfinden. Das Übermitteln der Empfangsberechtigung kann eine oder mehrere dieser Kommunikationsmethoden nutzen; es kann z.B. während eines Chats stattfinden. Die Ziffernfolge stellt einen Schlüssel oder einen Zeiger auf die Empfangsberechtigung dar. Die Ziffernfolge kann beliebig kodiert sein, z.B. als verschlüsselte Zahlenfolge und/oder als ein Barcode. Die Ziffernfolge kann einen Hinweis - z.B. einen Link - auf den Anbieterserver umfassen. Nach der dritten Transaktion könnte die zweite Person die Empfangsberechtigung auf dem Anbieterserver einlösen. Vorteilhafterweise werden für die dritte Transaktion keine weiteren Daten benötigt. Dies kann bedeuten, dass für dieses "Schenken" weder die Identität (der sog. "Klarname") noch die Adresse, weder der ersten noch der zweiten Person, preisgegeben werden muss. Die Empfangsberechtigung kann so gestaltet sein, dass keine Information über die Art der Empfangsberechtigung gegeben wird; der oder die Beschenkte kann bei dieser Ausgestaltung der dritten Transaktion über den Gegenstand der Empfangsberechtigung im Unklaren sein. Die Empfangsberechtigung kann z.B. auch als ein Symbol, z.B. ein Logo, gestaltet sein, das entweder den Geschenkcharakter unterstreicht oder einen Hinweis auf die Art der Empfangsberechtigung gibt.

Die Empfangsberechtigung und der Anbieterserver sind dazu ausgeführt, bei Erhalt der Empfangsberechtigung durch den Anbieterserver von der zweiten Kommunikationsvorrichtung einen Versand einer Ware und/oder einer Berechtigung an eine Adresse der zweiten Kommunikationsvorrichtung zu veranlassen. Bei der Ware und/oder der Berechtigung kann es sich beispielsweise um physische Gegenstände handeln, wie z.B. Blumen, ein oder mehrere Bücher oder E-Books, Parfum, Theaterkarten, Gutscheine und/oder andere Waren. Es kann sich auch um immaterielle Güter handeln, z.B. um Dienstleistungen und/oder um Rechte. Bei der Adresse der zweiten Kommunikationsvorrichtung kann es sich beispielsweise um eine physische Adresse eines Nutzers der zweiten Kommunikationsvorrichtung handeln. Es kann sich auch um eine E-Mail-Adresse handeln, um ein Konto, z.B. bei einer Bank oder bei einem Dienstleister wie z.B. einem Versandhändler, und/oder z.B. um einen Speicherbereich, auf den die zweite Kommunikationsvorrichtung zugreifen darf und/oder kann.

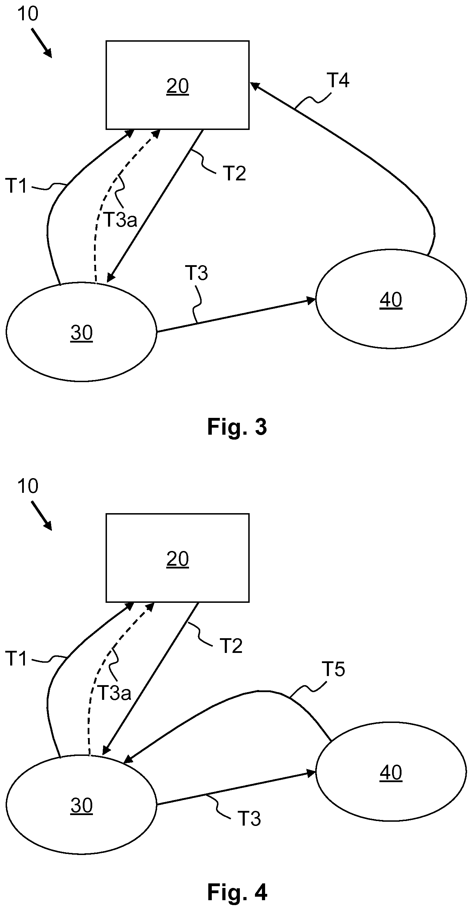

Damit ist in diesem und auch in weiteren Ausführungsbeispielen die Empfangsberechtigung derart ausgeführt, dass sie den Anbieterserver dazu veranlasst, wenn dieser die Empfangsberechtigung von der zweiten Kommunikationsvorrichtung erhält, ein Signal zu erzeugen, dass entsprechende Waren und/oder Berechtigungen versandt werden. Dies wird insbesondere im Kontext des Ausführungsbeispiels der **Fig. 3** näher erläutert.

In einer Ausführungsform kann der Anbieterserver über die dritte Transaktion informiert werden, z.B. mittels einer weiteren Transaktion. Damit könnte beispielsweise verhindert werden, dass die Empfangsberechtigung sich zugleich auf der ersten und der zweiten Kommunikationsvorrichtung befindet, was bedeuten könnte, dass sowohl die zweite Person (die z.B. beschenkt wurde) als auch die erste Person (die z.B. beschenkt hat) im Besitz der Empfangsberechtigung sind.

In einer Ausführungsform kann die zweite Kommunikationsvorrichtung, in einem weiteren Schritt, eine vierte Transaktion an den Anbieterserver zu übermitteln. Optional kann der Anbieterserver dann, ausgelöst durch die vierte Transaktion, die Empfangsberechtigung löschen. Das Löschen der Empfangsberechtigung kann das Löschen einer Datei umfassen, z.B. das physikalische Löschen der Datei auf einem nicht-volatilen Medium, z.B. einer Festplatte. Das Löschen der Empfangsberechtigung kann auch das Setzen eines Attributs, z.B. "nicht mehr gültig", oder den Eintrag eines Vermerks in der Datei und/oder in der History der Datei umfassen. Das Löschen der Empfangsberechtigung kann auch das Transferieren der Datei in ein anderes Directory und/oder zu einem anderen Server, z.B. "Archiv" oder "Erledigt", umfassen. Dies kann dem Einlösen der Empfangsberechtigung entsprechen. Mit einem derartigen Löschen der Empfangsberechtigung könnte beispielsweise verhindert werden, dass die Empfangsberechtigung mehrfach benutzt, d.h. z.B. eingelöst, wird.

Wenn die Empfangsberechtigung beispielsweise zum Empfang von physischen Gegenständen, wie z.B. Blumen oder anderen Waren, berechtigt, dann kann mit der vierten Transaktion die Adresse der zweiten Kommunikationsvorrichtung übermittelt werden. Die Adresse der zweiten Kommunikationsvorrichtung kann auch dem Anbieterserver bereits bekannt sein. Bei der Adresse der zweiten Kommunikationsvorrichtung kann es sich beispielsweise um eine physische Adresse, eine E-Mail-Adresse, ein Konto, und/oder z.B. um einen zugreifbaren Speicherbereich eines Nutzers der zweiten Kommunikationsvorrichtung handeln. Auch in diesem Fall ist es nicht nötig, die Adresse der zweiten Kommunikationsvorrichtung - und damit ggf. der zweiten Person - der ersten Person bekanntzugeben. Wenn also die Ware, Dienstleistung, und/oder andere Berechtigung an die zweite Kommunikationsvorrichtung bzw. die zweite Person gesandt oder übermittelt wurde, dann erlischt die Empfangsberechtigung; dies kann dem Löschen der Empfangsberechtigung entsprechen. Damit könnte beispielsweise verhindert werden, dass die Empfangsberechtigung mehrfach benutzt wird.

In einer Ausführungsform löst das Übermitteln der Empfangsberechtigung mittels der vierten Transaktion und/oder das Löschen der Empfangsberechtigung eine Einlöseaktion aus. Die Einlöseaktion könnte das Übermitteln der Ware, das Senden einer Spende, oder auch das Übermitteln einer Nachricht oder einer Lizenz beinhalten. Dies kann dem Einlösen der Empfangsberechtigung entsprechen.

In einer Ausführungsform beinhaltet die Einlöseaktion das Übermitteln einer Nachricht von dem Anbieterserver zu der ersten Kommunikationsvorrichtung. Der Inhalt der Nachricht kann z.B. sein, dass die Empfangsberechtigung eingelöst wurde. Auch diese Nachricht benötigt keine weiteren Details, wie z.B. eine Adresse, zu der zweiten Kommunikationsvorrichtung bzw. zu dem oder der Einlösenden.

In einer Ausführungsform kann der Anbieterserver, in einem weiteren Schritt, die Empfangsberechtigung löschen, wenn die vierte Transaktion nicht innerhalb einer vordefinierten Zeitspanne übermittelt wird. Dies kann einem Vorgang entsprechen, bei dem ein Gutschein nicht rechtzeitig eingelöst wird und damit verfällt. Das Löschen der Empfangsberechtigung kann dazu führen, dass z.B. ein von der ersten Person möglicherweise bezahlter Betrag wieder gutgeschrieben wird, d.h. auf die erste Kommunikationsvorrichtung übertragen wird. Das Löschen der Empfangsberechtigung kann dazu führen, dass der von der ersten Person möglicherweise bezahlte Betrag verfällt, z.B. bei verderblichen Waren oder bei Verjährung. Das Löschen der Empfangsberechtigung kann dazu führen, dass der von der ersten Person bezahlte Betrag zurückbezahlt wird.

In einer Ausführungsform kann die zweite Kommunikationsvorrichtung, in einem weiteren Schritt, mittels einer fünften Transaktion die Empfangsberechtigung an die erste Kommunikationsvorrichtung übermitteln. Dies kann einem Zurückweisen der Empfangsberechtigung entsprechen. In diesem Fall könnte der Bezahlvorgang wieder rückgängig gemacht werden oder verfallen. Die Empfangsberechtigung könnte daraufhin gelöscht werden, mit den Konsequenzen wie oben geschildert.

In einer Ausführungsform kann die erste Kommunikationsvorrichtung, in einem weiteren Schritt, mittels einer weiteren Transaktion an den Anbieterserver, über die dritte Transaktion informieren. Damit kann beispielsweise verhindert werden, dass sich die Empfangsberechtigung zugleich auf der ersten und der zweiten Kommunikationsvorrichtung (und somit gleichzeitig im Besitz zweier Personen) befindet.

In einer Ausführungsform kann die Empfangsberechtigung an eine weitere Kommunikationsvorrichtung weiterversandt werden. Das Weiterversenden kann z.B. statt der vierten Transaktion und/oder statt der fünften Transaktion durchgeführt werden. Das Weiterversenden kann einem Vorgang des Weiterschenkens entsprechen.

In einer Ausführungsform ist die Empfangsberechtigung eine Ziffernfolge, eine Adresse, ein Barcode und/oder ein QR-Code. Die Empfangsberechtigung kann so gestaltet sein, dass keine Information über die Art der Empfangsberechtigung gegeben wird, d.h. dass der Gegenstand der Empfangsberechtigung für die zweite Person eine Überraschung darstellt. Die Empfangsberechtigung kann z.B. auch als ein Symbol, z.B. ein Logo, gestaltet sein, das entweder den Geschenkcharakter unterstreicht - z.B. mit dem Logo einer Geschenkbox - oder einen Hinweis auf die Art der Empfangsberechtigung gibt.

In einer Ausführungsform ist die Empfangsberechtigung auf einem Speicher des Anbieterservers gespeichert und weist mindestens folgende Einträge auf:
- einen ersten Bezeichner für den Gegenstand der Empfangsberechtigung, und
- einen zweiten Bezeichner für die erste Transaktion.

Auf die verschiedenen Felder der Empfangsberechtigung können unterschiedliche Kommunikationsvorrichtungen unterschiedliche Zugriffsberechtigungen haben. So kann beispielsweise sowohl die erste und die zweite Kommunikationsvorrichtung einen Lesezugriff auf den ersten Bezeichner haben. In einem Fall, dass ein Geschenk eine Überraschung sein soll, kann z.B. nur die erste Kommunikationsvorrichtung einen Lesezugriff haben. Wenn beispielsweise die erste Transaktion einen Kauf beinhaltet, dann kann nur die erste Kommunikationsvorrichtung einen Lese- und Schreibzugriff haben. Die Empfangsberechtigung kann darüber hinaus noch weitere Felder mit weiter unterschiedlichen Zugriffsberechtigungen aufweisen. So kann z.B. eine Lieferadresse eingetragen sein, auf welche nur die zweite Kommunikationsvorrichtung einen Lese- und Schreibzugriff hat.

Ein weiterer Aspekt der Erfindung betrifft ein Kommunikationssystem, welches einen Anbieterserver aufweist, welcher dazu eingerichtet ist, eine erste Transaktion zu empfangen und eine zweite Transaktion zu übermitteln; eine erste Kommunikationsvorrichtung, welche dazu eingerichtet ist, eine erste Transaktion und eine dritte Transaktion zu übermitteln und eine zweite Transaktion zu empfangen; und eine zweite Kommunikationsvorrichtung, welche dazu eingerichtet ist, eine dritte Transaktion zu empfangen und eine vierte Transaktion oder eine fünfte Transaktion zu übermitteln. Dabei ist der Anbieterserver dazu eingerichtet, ausgelöst durch die erste Transaktion von der ersten Kommunikationsvorrichtung, eine Empfangsberechtigung zu erzeugen und, mittels der zweiten Transaktion, die Empfangsberechtigung an die erste Kommunikationsvorrichtung zu übermitteln, und die erste Kommunikationsvorrichtung ist dazu eingerichtet, mittels der dritten Transaktion, die Empfangsberechtigung an die zweite Kommunikationsvorrichtung zu übermitteln.

In einer Ausführungsform ist die zweite Kommunikationsvorrichtung weiterhin dazu eingerichtet, mittels einer vierten Transaktion die Empfangsberechtigung an den Anbieterserver zu übermitteln.

In einer Ausführungsform ist der Anbieterserver dazu eingerichtet, ausgelöst durch die vierte Transaktion, die Empfangsberechtigung zu löschen und/oder eine Einlöseaktion auszulösen.

In einer Ausführungsform ist die zweite Kommunikationsvorrichtung weiterhin dazu eingerichtet, mittels einer fünften Transaktion, die Empfangsberechtigung an die erste Kommunikationsvorrichtung zu übermitteln.

Ein weiterer Aspekt der Erfindung betrifft ein Programmelement, das, wenn es auf einem Kommunikationssystem ausgeführt wird, das Kommunikationssystem anweist, ein Verfahren wie es oben oder im Folgenden beschrieben ist, durchzuführen. Das Kommunikationssystem weist dabei eine erste Kommunikationsvorrichtung, eine zweite Kommunikationsvorrichtung und einen Anbieterserver auf. Das Programmelement kann auf einer einzigen Kommunikationsvorrichtung ausgeführt werden, es kann aber auch auf mehrere Kommunikationsvorrichtungen verteilt sein, insbesondere als Apps, die beispielsweise auf einem Smartphone implementiert sind und die mit einem Programmteil auf einem Server zusammenarbeiten. Ein weiterer Aspekt der Erfindung betrifft ein computerlesbares Medium, auf dem ein Programmelement wie oben geschildert gespeichert ist.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

Die beschriebenen Ausführungsbeispiele betreffen gleichermaßen das Kommunikationssystem sowie das Verfahren. Mit anderen Worten können Merkmale, die im Folgenden in Bezug auf das Kommunikationssystem beschrieben werden, ebenso in das Kommunikationssystem implementiert werden und als Merkmale des Verfahrens angesehen werden, und umgekehrt. Weiterhin sei angemerkt, dass alle Ausführungsformen der vorliegenden Erfindung, die ein Verfahren betreffen, in der Reihenfolge der Schritte wie beschrieben ausgeführt werden können; dennoch muss dies nicht die einzig mögliche und/oder wesentliche Reihenfolge der Schritte sein. Die beschriebenen Verfahren können in einer anderen als der offenbarten Reihenfolge der Schritte ausgeführt werden, ohne dadurch von dem entsprechenden Ausführungsbeispiel des Verfahrens abzuweichen, solange dies im Folgenden nicht explizit ausgeschlossen wird.

### Kurze Beschreibung der Figuren

Dabei zeigt:
**Fig. 1** eine schematische Darstellung eines Kommunikationssystems gemäß einer Ausführungsform der vorliegenden Erfindung;
**Fig. 2** eine schematische Darstellung eines Eintrags der Empfangsberechtigung in einem Speicher;
**Fig. 3** eine schematische Darstellung eines Verfahrens gemäß einer Ausführungsform der vorliegenden Erfindung;
**Fig. 4** eine schematische Darstellung eines Verfahrens gemäß einer weiteren Ausführungsform der vorliegenden Erfindung;
**Fig. 5** ein Flussdiagramm eines Verfahrens gemäß einer nochmals weiteren Ausführungsform der vorliegenden Erfindung.

### Detaillierte Beschreibung der Ausführungsformen

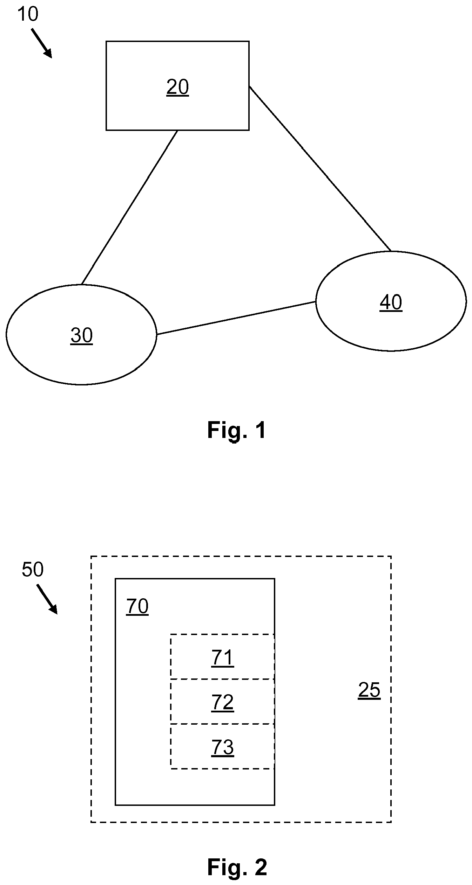

**Fig. 1** zeigt ein Kommunikationssystem 10 gemäß einer Ausführungsform der vorliegenden Erfindung. Das Kommunikationssystem 10 weist einen Anbieterserver 20 auf. Außerdem weist es eine erste Kommunikationsvorrichtung 30 und eine zweite Kommunikationsvorrichtung 40 auf. Der Anbieterserver 20 ist mit der ersten 30 und der zweiten 40 Kommunikationsvorrichtung verbunden, so dass Transaktionen zwischen dem Anbieterserver und den Kommunikationsvorrichtungen und Transaktionen zwischen den Kommunikationsvorrichtungen stattfinden können. Der Anbieterserver 20 kann einen oder mehrere Server umfassen, beispielsweise Verwaltungsserver oder auch Server von kommerziellen Anbietern und/oder Plattformen, insbesondere Verkaufsplattformen. Der Server kann z.B. Teil einer Cloud sein. Die Kommunikationsvorrichtungen 30, 40 können z.B. als ein PC, ein Tablet oder ein Smartphone ausgestaltet sein, die ein Programmteil, z.B. eine App, aufweisen, welche mit dem Anbieterserver 20 kommunizieren kann. Die Kommunikationsvorrichtungen 30, 40 können einzelnen Personen zugeordnet sein; so kann z.B. eine erste Person die erste Kommunikationsvorrichtung 30 bedienen und eine zweite Person, die mit der ersten Person eine Unterhaltung führt, kann die zweite Kommunikationsvorrichtung 40 bedienen. Die Unterhaltung kann z.B. mittels eines Chat-Programms, Instant Messaging, SMS oder mittels anderer Kommunikationsmittel geführt werden. Auf einem solchen Kommunikationssystem kann die vorliegenden Erfindung implementiert und durchgeführt werden. Beispielsweise kann ein Verfahren zum Erzeugen und Versenden einer Empfangsberechtigung, von einer ersten Kommunikationsvorrichtung zu einer zweiten Kommunikationsvorrichtung, implementiert und durchgeführt werden. Das Verfahren weist dabei folgende Schritte auf:
- Erzeugen der Empfangsberechtigung 50 (siehe z.B. **Fig. 2**) auf dem Anbieterserver 20, ausgelöst durch eine erste Transaktion T1 (siehe z.B. **Fig. 3**) der ersten Kommunikationsvorrichtung 30.
- Übermitteln der Empfangsberechtigung 50, mittels einer zweiten Transaktion T2 des Anbieterservers 20, von dem Anbieterserver 20 zu der ersten Kommunikationsvorrichtung 30.
- Übermitteln der Empfangsberechtigung 50, mittels einer dritten Transaktion T3 der ersten Kommunikationsvorrichtung 30, von der ersten Kommunikationsvorrichtung 30 zu der zweiten Kommunikationsvorrichtung 40.

Dabei sind die Empfangsberechtigung 50 und der Anbieterserver 20 dazu ausgeführt, bei Erhalt der Empfangsberechtigung 50 durch den Anbieterserver 20 von der zweiten Kommunikationsvorrichtung 40 einen Versand einer Ware und/oder einer anderen Berechtigung an eine Adresse der zweiten Kommunikationsvorrichtung zu veranlassen.

**Fig. 2** zeigt eine schematische Darstellung eines Eintrags 70 der Empfangsberechtigung 50 in einem Speicher 25. Der Speicher 25 kann sich beispielsweise auf dem Server 20 oder einer anderen Kommunikationseinrichtung befinden und/oder mit dem Server 20 in Kommunikationsverbindung stehen. Der Eintrag 70 weist einen Schlüssel 71 auf, mittels dessen auf die Elemente des Eintrags 70 schnell zugegriffen werden kann. Weiterhin weist der Eintrag 70 einen ersten Bezeichner 72 für den Gegenstand der Empfangsberechtigung 50 auf. Der Gegenstand der Empfangsberechtigung kann z.B. Waren, Gutscheine, Spenden, Dienstleistungen und/oder anderen Berechtigungen umfassen, z.B. Blumen, eine Ballonfahrt oder ein E-Book. Auf den ersten Bezeichner 72 kann die erste Kommunikationsvorrichtung 30 eine Zugriffsberechtigung haben; die zweite Kommunikationsvorrichtung 40 kann, z.B. durch die erste Kommunikationsvorrichtung 30, die Zugriffsberechtigung erteilt bekommen. Dies kann in Fällen sein, wenn die zweite Person, welche die zweite Kommunikationsvorrichtung 40 bedient, über den Gegenstand der Empfangsberechtigung informiert werden soll. Der Eintrag 70 weist außerdem einen zweiten Bezeichner 73 auf; dieser enthält den Inhalt einer ersten Transaktion T1. Die Zugriffsberechtigung für den zweiten Bezeichner 73 kann z.B. exklusiv für die erste Kommunikationsvorrichtung 30 erteilt werden.

**Fig. 3** zeigt eine schematische Darstellung eines Verfahrens des Kommunikationssystems 10 gemäß einer Ausführungsform der vorliegenden Erfindung. Dabei übermittelt die erste Kommunikationsvorrichtung 30 die erste Transaktion T1 an den Anbieterserver 20. Die erste Transaktion T1 kann z.B. einen Kauf beinhalten, den die erste Person durchführt. Ausgelöst durch die erste Transaktion T1, von der ersten Kommunikationsvorrichtung 30, erzeugt der Anbieterserver 20 eine Empfangsberechtigung 50 (nicht dargestellt) und übermittelt diese, mittels einer zweiten Transaktion T2, an die erste Kommunikationsvorrichtung 30. Dies kann z.B. dem Kauf eines Gegenstands entsprechen, der damit in den Besitz der ersten Person gelangt. Wenn die erste Person diesen Gegenstand - z.B. während einer Unterhaltung via Chat - an die zweite Person senden will, dann kann dies geschehen, indem die erste Kommunikationsvorrichtung 30, mittels einer dritten Transaktion T3, die Empfangsberechtigung 50 an die zweite Kommunikationsvorrichtung 40 übermittelt. Dabei kann die erste Kommunikationsvorrichtung 30, mittels einer weiteren Transaktion T3a, den Anbieterserver 20 über die dritte Transaktion informieren. Zum Einlösen der Empfangsberechtigung 50 übermittelt die zweite Kommunikationsvorrichtung 40 eine vierte Transaktion T4 an den Anbieterserver 20. Daraufhin kann der Anbieterserver 20 die Empfangsberechtigung 50 (nicht dargestellt) löschen.

Eine konkrete Ausprägung eines Verfahrens gemäß **Fig. 3** könnte beispielsweise den Kauf von Blumen mittels der ersten Transaktion T1 an den Anbieterserver 20 umfassen. Dabei müssen nicht alle Aspekte des Kaufs auf einem einzelnen Server abgewickelt werden. Beispielsweise kann der Kauf den Zugriff auf den Server einer Bank, z.B. für den Bezahlvorgang, beinhalten. Der Kauf kann auch den Zugriff auf den Server eines Dienstleisters, z.B. eines Blumenversandhändlers, umfassen. Wurde der Kauf erfolgreich abgeschlossen, dann übermittelt der Anbieterserver 20 eine Empfangsberechtigung 50 für diese Blumen an die erste Kommunikationsvorrichtung 30, z.B. in Form einer Zahlenreihe oder eines QR-Codes. Die Empfangsberechtigung 50 gelangt damit in den Besitz des Nutzers der ersten Kommunikationsvorrichtung 30, d.h. der ersten Person. Wenn die erste Person diese Blumen an die zweite Person verschenken will, so kann das z.B. während eines Chats geschehen, bei dem z.B. der Nutzer der ersten Kommunikationsvorrichtung 30 mit dem Nutzer der zweiten Kommunikationsvorrichtung 40 in einer Kommunikationsverbindung steht. Um das Verschenken zu veranlassen, übermittelt die erste Person, als Nutzer der ersten Kommunikationsvorrichtung 30, mittels einer zweiten Transaktion T2, die die Empfangsberechtigung 50 - im Form der Zahlenreihe bzw. des QR-Codes - an die zweite Kommunikationsvorrichtung 40. Um das Geschenk einzulösen, übermittelt die zweite Kommunikationsvorrichtung 40 eine vierte Transaktion T4 an den Anbieterserver 20, z.B. durch Senden der Zahlenreihe bzw. des QR-Codes. Dabei kann die erste Kommunikationsvorrichtung 30, mittels der Transaktion T3a, den Anbieterserver 20 über die dritte Transaktion informieren. Damit könnte beispielsweise verhindert werden, dass sich die Empfangsberechtigung zugleich auf der ersten und der zweiten Kommunikationsvorrichtung (und somit gleichzeitig im Besitz zweier Personen) befindet. Mit der vierten Transaktion kann die Adresse der zweiten Kommunikationsvorrichtung übermittelt werden, also z.B. die Adresse der zweiten Person, an welche die Blumen versandt werden sollen. Es sei angemerkt, dass dazu weder die Adresse der zweiten Person noch z.B. ein Klarname der zweiten Person an die erste Person übermittelt werden müssen. Bei Erhalt der Empfangsberechtigung 50 von der zweiten Kommunikationsvorrichtung 40 kann der Anbieterserver 20 einen Versand der Blumen an die Adresse der zweiten Kommunikationsvorrichtung 40 veranlassen. Nach dem Versand oder dem Veranlassen des Versands kann der Anbieterserver 20 die Empfangsberechtigung 50 löschen.

Damit ist in diesem und auch in weiteren Ausführungsbeispielen die Empfangsberechtigung 50 derart ausgeführt, dass sie den Anbieterserver 20 dazu veranlasst, wenn dieser die Empfangsberechtigung 50 von der zweiten Kommunikationsvorrichtung 40 erhält, ein Signal zu erzeugen, dass entsprechende Waren und/oder Berechtigungen versandt werden.

**Fig. 4** zeigt eine schematische Darstellung eines Verfahrens des Kommunikationssystems 10 gemäß einer weiteren Ausführungsform der vorliegenden Erfindung. Dabei sind die Transaktionen T1, T2, T3 und T3a mit den in **Fig. 3** gezeigten Transaktionen T1, T2, T3 und T3a identisch. Ein Unterschied zu dem in **Fig. 3** gezeigten Verfahren besteht darin, dass die vierte Transaktion T4 entfällt und stattdessen eine fünfte Transaktion T5 von der zweiten Kommunikationsvorrichtung 40 an die erste Kommunikationsvorrichtung 30 durchgeführt wird. Dies kann einem Zurückweisen der Empfangsberechtigung 50 entsprechen.

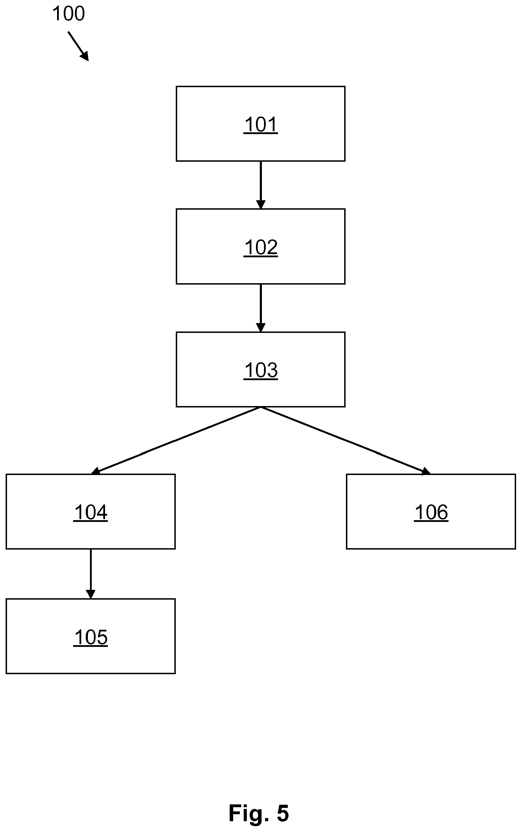

**Fig. 5** zeigt ein Flussdiagramm 100 eines Verfahrens des Kommunikationssystems 10 gemäß einer nochmals weiteren Ausführungsform der vorliegenden Erfindung. Dabei wird in einem Schritt 101 eine Empfangsberechtigung 50 auf eine Anbieterserver 20 erzeugt, ausgelöst durch eine erste Transaktion T1 einer ersten Kommunikationsvorrichtung 30. Die erste Transaktion T1 kann z.B. einen Kauf oder sonstigen Erwerb beinhalten und kann "Unter-Transaktionen" beinhalten, die z.B. auf einem anderen Server abgewickelt werden. In einem Schritt 102 wird die Empfangsberechtigung 50, ausgelöst durch eine zweite Transaktion T2 des Anbieterservers 20, von dem Anbieterserver 20 zu der ersten Kommunikationsvorrichtung 30 übermittelt. Die zweite Transaktion T2 kann z.B. Versenden eines Codes, z.B. einer Ziffernfolge, umfassen. Der Code kann z.B. durch einen Link, Barcode oder QR-Code realisiert sein. In einem Schritt 103 wird die Empfangsberechtigung 50, mittels einer dritten Transaktion T3 der ersten Kommunikationsvorrichtung 30, von der ersten Kommunikationsvorrichtung 30 zu einer zweiten Kommunikationsvorrichtung 40 übermittelt. Die zweite Kommunikationsvorrichtung 40 kann dann wahlweise einen Schritt 104 einleiten, welcher ein Übermitteln der Empfangsberechtigung 50, ausgelöst durch eine vierte Transaktion T4 der zweiten Kommunikationsvorrichtung 40, von der zweiten Kommunikationsvorrichtung 40 zu dem Anbieterserver 20, umfasst. Dies kann dem Einlösen eines Gutscheins entsprechen. Der Schritt 104 wird gefolgt von einem Schritt 105, bei dem das Löschen der Empfangsberechtigung 50, durch den Anbieterserver 20 stattfindet. Alternativ zu dem Schritt 104 kann die zweite Kommunikationsvorrichtung 40 den Schritt 106 einleiten, bei dem die zweite Kommunikationsvorrichtung 40, mittels einer fünften Transaktion T5, die Empfangsberechtigung 50 an die erste Kommunikationsvorrichtung 30 übermitteln, d.h. gewissermaßen "zurückgeben", kann.

Ergänzend ist darauf hinzuweisen, dass "umfassend" keine anderen Elemente oder Schritte ausschließt und "eine" oder "ein" keine Vielzahl ausschließt. Ferner sei daraufhingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

### Liste der Bezugszeichen

- 10: Kommunikationssystem
- 20: Anbieterserver
- 30: erste Kommunikationsvorrichtung
- 40: zweite Kommunikationsvorrichtung
- 50: Empfangsberechtigung
- 70: Struktur
- 71: Feld 1, Schlüssel
- 72: Feld 2, erster Bezeichner
- 73: Feld 3, zweiter Bezeichner
- 100: Flussdiagramm
- 101 - 106: Schritte
- T1: erste Transaktion
- T2: zweite Transaktion
- T3: dritte Transaktion
- T3a: weitere Transaktion
- T4: vierte Transaktion
- T5: fünfte Transaktion

## Patentansprüche

1. Verfahren zum Erzeugen und Versenden einer Empfangsberechtigung (50), von einer ersten Kommunikationsvorrichtung (30) zu einer zweiten Kommunikationsvorrichtung (40), wobei das Verfahren folgende Schritte aufweist:
- Erzeugen der Empfangsberechtigung (50), ausgelöst durch eine erste Transaktion (T1) der ersten Kommunikationsvorrichtung (30), auf einem Anbieterserver (20);
- Übermitteln der Empfangsberechtigung (50), mittels einer zweiten Transaktion (T2) des Anbieterservers (20), von dem Anbieterserver (20) zu der ersten Kommunikationsvorrichtung (30); und
- Übermitteln der Empfangsberechtigung (50), mittels einer dritten Transaktion (T3) der ersten Kommunikationsvorrichtung (30), von der ersten Kommunikationsvorrichtung (30) zu der zweiten Kommunikationsvorrichtung (40), wobei die Empfangsberechtigung (50) und der Anbieterserver (20) dazu ausgeführt sind, bei Erhalt der Empfangsberechtigung (50) durch den Anbieterserver (20) von der zweiten Kommunikationsvorrichtung (40) einen Versand einer Ware und/oder einer Berechtigung an eine Adresse der zweiten Kommunikationsvorrichtung (40) zu veranlassen.

2. Verfahren nach Anspruch 1, weiterhin aufweisend die Schritte:
- Übermitteln der Empfangsberechtigung (50), mittels einer vierten Transaktion (T4) der zweiten Kommunikationsvorrichtung (40), von der zweiten Kommunikationsvorrichtung (40) zu dem Anbieterserver (20); und, optional,
- Löschen der Empfangsberechtigung (50) durch den Anbieterserver (20).

3. Verfahren nach Anspruch 2,
wobei das Übermitteln der Empfangsberechtigung (50) mittels der vierten Transaktion (T4) und/oder das Löschen der Empfangsberechtigung (50) eine Einlöseaktion auslöst.

4. Verfahren nach Anspruch 3,
wobei die Einlöseaktion das Übermitteln einer Nachricht von dem Anbieterserver (20) zu der ersten Kommunikationsvorrichtung (30) beinhaltet.

5. Verfahren nach einem der vorhergehenden Ansprüche, mit dem weiteren Schritt:
- Wenn die vierte Transaktion (T4) nicht innerhalb einer vordefinierten Zeitspanne übermittelt wird, löschen der Empfangsberechtigung (50) durch den Anbieterserver (20).

6. Verfahren nach einem der vorhergehenden Ansprüche, mit dem weiteren Schritt:
- Übermitteln, mittels einer fünften Transaktion (T5) der zweiten Kommunikationsvorrichtung (40), der Empfangsberechtigung (50) an die erste Kommunikationsvorrichtung (30).

7. Verfahren nach einem der vorhergehenden Ansprüche, mit dem weiteren Schritt:
- Informieren, mittels einer weiteren Transaktion (T3a) der ersten Kommunikationsvorrichtung (30), des Anbieterservers (20) über die dritte Transaktion (T3).

8. Verfahren nach einem der vorhergehenden Ansprüche,
wobei die Empfangsberechtigung (50) eine Ziffernfolge, eine Adresse, ein Barcode und/oder ein QR-Code ist.

9. Verfahren nach einem der vorhergehenden Ansprüche,
wobei die Empfangsberechtigung (50) auf einem Speicher (25) des Anbieterservers (20) gespeichert ist und mindestens folgende Einträge aufweist:
- einen ersten Bezeichner (72) für den Gegenstand der Empfangsberechtigung (50), und
- einen zweiten Bezeichner (73) für die erste Transaktion (T1).

10. Kommunikationssystem (10), aufweisend:
einen Anbieterserver (20), welcher dazu eingerichtet ist, eine erste Transaktion (T1) zu empfangen und eine zweite Transaktion (T2) zu übermitteln,
eine erste Kommunikationsvorrichtung (30), welche dazu eingerichtet ist, eine erste Transaktion (T1) und eine dritte Transaktion (T3) zu übermitteln und eine zweite Transaktion (T2) zu empfangen, und
eine zweite Kommunikationsvorrichtung (40), welche dazu eingerichtet ist, eine dritte Transaktion (T3) zu empfangen und eine vierte Transaktion (T4) oder eine fünfte Transaktion (T5) zu übermitteln,
wobei der Anbieterserver (20) dazu eingerichtet ist, ausgelöst durch die erste Transaktion (T1) von der ersten Kommunikationsvorrichtung (30), eine Empfangsberechtigung (50) zu erzeugen und, mittels der zweiten Transaktion (T2), die Empfangsberechtigung (50) an die erste Kommunikationsvorrichtung (30) zu übermitteln, und
wobei die erste Kommunikationsvorrichtung (30) dazu eingerichtet ist, mittels der dritten Transaktion (T3), die Empfangsberechtigung (50) an die zweite Kommunikationsvorrichtung (40) zu übermitteln.

11. Kommunikationssystem (10) nach Anspruch 10,
wobei weiterhin die zweite Kommunikationsvorrichtung (40) dazu eingerichtet ist, mittels einer vierten Transaktion (T4) die Empfangsberechtigung (50) an den Anbieterserver (20) zu übermitteln.

12. Kommunikationssystem (10) nach Anspruch 11,
der Anbieterserver (20) dazu eingerichtet ist, ausgelöst durch die vierte Transaktion (T4), die Empfangsberechtigung (50) zu löschen und/oder eine Einlöseaktion auszulösen.

13. Kommunikationssystem (10) nach einem der Ansprüche 10 bis 12,
wobei die zweite Kommunikationsvorrichtung (40) weiterhin dazu eingerichtet ist, mittels einer fünften Transaktion (T5), die Empfangsberechtigung (50) an die erste Kommunikationsvorrichtung (30) zu übermitteln.

14. Programmelement, das, wenn es auf einem Kommunikationssystem (10) ausgeführt wird, das Kommunikationssystem (10) anweist, ein Verfahren gemäß einem der Ansprüche 1 bis 9 durchzuführen, wobei das Kommunikationssystem (10) eine erste Kommunikationsvorrichtung (30), eine zweite Kommunikationsvorrichtung (40) und einen Anbieterserver (20) aufweist.

15. Computerlesbares Medium, auf dem ein Programmelement nach Anspruch 14 gespeichert ist.
